# EUROPEAN PATENT APPLICATION

(11) **EP 4 618 303 A2**
(43) Date of publication of application: **17.09.2025**
(21) Application number: 25192490.8
(22) Date of filing: 30.09.2021
(51) Int. Cl.: H01M 50/566

(54) **BATTERY CELL AND MANUFACTURING METHOD AND MANUFACTURING SYSTEM THEREFOR, BATTERY, AND POWER CONSUMING DEVICE**

(62) Divisional of application: 21953018.5
(71) Applicant: Contemporary Amperex Technology (Hong Kong) Limited, Central, Central And Western District (HK)
(72) Inventor: FANG, Kun, Fujian, 352100 (CN); GUO, Zhijun, Fujian, 352100 (CN)
(74) Representative: Kraus & Lederer PartGmbB

(57) **Abstract**

Some embodiments of this application provide a battery cell, a method and system for manufacturing same, a battery, and an electrical device. The battery cell according to an embodiment of this application includes: a housing, on which an opening is made; an electrode assembly, accommodated in the housing, where the electrode assembly includes a first tab at an end oriented toward the opening; an end cap, configured to fit and cover the opening to seal the electrode assembly in the housing; a current collecting member, disposed between the end cap and the first tab, where the current collecting member is configured to be welded to the end cap and the first tab separately to implement electrical connection between the end cap and the first tab. This application reduces the risk that microcracks occur on the end cap during welding of the end cap, and improves airtightness and safety.

## Description

### TECHNICAL FIELD

This application relates to the technical field of batteries, and more specifically, to a battery cell, a method and system for manufacturing same, a battery, and an electrical device.

### BACKGROUND

Battery cells are widely used in electronic devices such as a mobile phone, a notebook computer, an electric power cart, an electric vehicle, an electric airplane, an electric ship, an electric toy car, an electric toy ship, an electric toy airplane, and a power tool. The battery cells may include a nickel-cadmium battery cell, a nickel-hydrogen battery cell, a lithium-ion battery cell, a secondary alkaline zinc-manganese battery cell, and the like.

**In** the development of battery technology, safety is a non-negligible problem in addition to improvement of the performance of the battery cell. If the safety of the battery cell is not guaranteed, the battery cell is not suitable for use. Therefore, how to enhance the safety of the battery cell is an urgent technical problem in the battery technology.

### SUMMARY

This application provides a battery cell, a method and system for manufacturing same, a battery, and an electrical device to enhance safety of the battery cell.

According to a first aspect, an embodiment of this application provides a battery cell, including: a housing, on which an opening is made; an electrode assembly, accommodated in the housing, where the electrode assembly includes a first tab at an end oriented toward the opening; an end cap, configured to fit and cover the opening to seal the electrode assembly in the housing; a current collecting member, disposed between the end cap and the first tab, where the current collecting member is configured to be welded to the end cap and the first tab separately to implement electrical connection between the end cap and the first tab.

In the foregoing technical solution, the current collecting member is welded to the end cap and the first tab separately to implement electrical connection between the end cap and the first tab. The current collecting member may fit the end cap closely to reduce the risk of generating microcracks on the end cap, improve sealing performance, reduce safety hazards, and improve safety. When the current collecting member is welded to the first tab, even if microcracks occur on the current collecting member, the airtightness of the battery cell is not affected.

In some embodiments, a part of the current collecting member is configured to abut on and be welded to the end cap to form a first weld portion, and another part of the current collecting member is configured to abut on and be welded to the first tab to form a second weld portion. A projection of the first weld portion along a thickness direction of the end cap does not overlap a projection of the second weld portion along the thickness direction of the end cap.

In the foregoing technical solution, the projection of the first weld portion along a thickness direction of the end cap does not overlap the projection of the second weld portion along the thickness direction of the end cap, so that the welding between the end cap and the current collecting member is not affected by the second weld portion, thereby improving reliability of the welding between the end cap and the current collecting member.

In some embodiments, the electrode assembly is wound around a central axis to form the first tab. The first tab includes N layer structures arranged around the central axis. An extension direction of the central axis is parallel to the thickness direction of the end cap. The first tab is formed of a first annular portion and a second annular portion around the first annular portion. A number of the layer structures in the first annular portion is N1, a number of the layer structures in the second annular portion is N2, N = N1 + N2, |N1-N2| is less than or equal to 2, and N1 and N2 are positive integers. The first annular portion is welded to the current collecting member to form a first part. The second annular portion is welded to the current collecting member to form a second part connected to the first part. The second weld portion is formed of the first part and the second part.

In the foregoing technical solution, electrons in the region corresponding to the first annular portion in the electrode assembly can move along a first current path formed by the first annular portion, the first part, the current collecting member, the first weld portion, and the end cap. Electrons in the region corresponding to the second annular portion in the electrode assembly can move along a second current path formed by the second annular portion, the second part, the current collecting member, the first weld portion, and the end cap. In addition, a boundary between the first annular portion and the second annular portion is approximately located in a middle region of the first tab along a radial direction. In other words, some layer structures in the middle region of the first tab are welded to the current collecting member to form a part of the second weld portion, thereby reducing the difference between the first current path and the second current path to some extent, and in turn, improving uniformity of a current density, reducing an internal resistance, and increasing a flow capacity.

In some embodiments, N3 continuous layer structures disposed near the second annular portion in the first annular portion are welded to the current collecting member to form the first part. N4 continuous layer structures disposed near the first annular portion in the second annular portion are welded to the current collecting member to form the second part. The N3 continuous layer structures and the N4 continuous layer structures are arranged continuously, N4 > N3 ≥ 1, and N3 and N4 are positive integers.

In the foregoing technical solution, because the second annular portion surrounds the first annular portion, a perimeter of the layer structure in the second annular portion is greater than a perimeter of the layer structure in the first annular portion. The electrons in the region corresponding to the second annular portion in the electrode assembly travel a relatively long path between the layer structures of the second annular portion. In this technical solution, N4 is greater than N3, thereby increasing the layer structures connected to the second part, and reducing the transmission of electrons between the layer structures of the second annular portion. This shortens the second current path, and further reduces the difference between the first current path and the second current path, and in turn, improves the uniformity of the current density, reduces the internal resistance, and increases the flow capacity.

In some embodiments, M continuous layer structures in all the layer structures are welded to the current collecting member to form the second weld portion, where 1/3 ≤ M/N ≤ 1/2, M ≥ 2, and M is a positive integer.

The greater the value of M/N, the lower the internal resistance of the first tab, the larger the area of the second weld portion, and the higher the flow capacity between the first tab and the current collecting member. However, when the area of the current collecting member is constant, the greater the value of M/N, the smaller the area of the first weld portion, and the lower the flow capacity between the current collecting member and the end cap. The foregoing technical solution restricts the value of M/N to a range of 1/3 to 1/2, so that the flow capacity between the first tab and the current collecting member is balanced against the flow capacity between the current collecting member and the end cap, and the flow capacity of the battery cell is optimized.

In some embodiments, the end cap includes a cap body and a first protruding portion that protrudes from an inner surface of the cap body toward the first tab. The first protruding portion is configured to abut on and be welded to the current collecting member to form the first weld portion, and form a first avoidance clearance between the current collecting member and the cap body to avoid the second weld portion.

In the foregoing technical solution, the first avoidance clearance configured to avoid the second weld portion is disposed to prevent the second weld portion from abutting on the cap body, and reduce the risk that the second weld portion crushes the cap body. If the second weld portion abuts on the cap body, over-positioning may be formed between the end cap and the current collecting member, and the second weld portion may interfere with the abutment between the first protruding portion and the current collecting member. In this technical solution, the first avoidance clearance prevents the second weld portion from interfering with the abutment between the first protruding portion and the current collecting member, and ensures sufficient connection strength between the first protruding portion and the current collecting member.

In some embodiments, a first recessed portion is formed on the end cap at a position corresponding to the first protruding portion. The first recessed portion is recessed from an outer surface of the cap body toward the electrode assembly. A bottom face of the first recessed portion is closer to the first tab than the inner surface of the cap body.

In the foregoing technical solution, the thickness of the first protruding portion is reduced by the first recessed portion, thereby reducing the welding power required for welding the first protruding portion to the current collecting member, reducing heat emission, and reducing the risk of burning other components. The first recessed portion can reduce the strength of the first protruding portion, and increase elasticity of the first protruding portion. In this way, in a process of the first protruding portion approaching and pressing the current collecting member, the first protruding portion can deform to release a stress, reduce an impact force, and reduce the risk of crushing the current collecting member and the first tab. On the premise of ensuring an appropriate protrusion amount of the first protruding portion, this technical solution further ensures an appropriate recessing amount of the first recessed portion, thereby increasing elasticity of the first protruding portion and reducing the risk that the first protruding portion crushes the current collecting member and the first tab during assembling.

In some embodiments, the first protruding portion surrounds the cap body, and the first weld portion is disposed outside the second weld portion.

In some embodiments, an outer side face of the first protruding portion abuts on an inner surface of the housing and is configured to be welded to the housing to close the opening.

In the foregoing technical solution, the sealing is implemented by welding, so as to reduce the risk of leaking an electrolytic solution, and increase the connection strength and flow capacity between the housing and the first protruding portion.

In some embodiments, the end cap further includes an extension portion around the first protruding portion. A surface that is of the extension portion and that is oriented toward the first tab abuts on and is welded to an end face of the housing around the opening to close the opening.

In the foregoing technical solution, in a process of fitting the end cap onto the housing, the end face of the housing serves a function of limiting the position in the thickness direction, thereby reducing the risk of excessive insertion of the end cap into the housing, and improving the assembling efficiency.

In some embodiments, the end cap further includes a second protruding portion. The cap body surrounds the second protruding portion. The second protruding portion protrudes from the inner surface of the cap body toward the first tab. A second recessed portion is formed on the end cap at a position corresponding to the second protruding portion, and the second recessed portion is recessed from an outer surface of the cap body toward the electrode assembly.

By disposing the second protruding portion and the second recessed portion in the middle of the end cap, the foregoing technical solution increases the strength of the end cap and reduces deformation of the end cap.

In some embodiments, a fragile portion is disposed in a region opposite to a bottom face of the second recessed portion on the second protruding portion. The fragile portion is configured to rupture when an internal pressure of the battery cell reaches a threshold, so as to release the internal pressure.

In the foregoing technical solution, the fragile portion is disposed on the second protruding portion to release the internal pressure when the battery cell is thermally runaway, thereby improving the safety performance. The fragile portion is formed in the region opposite to the bottom face of the second recessed portion on the second protruding portion, thereby increasing the distance between the fragile portion and other external components, and reducing the risk that an external component crushes the fragile portion.

In some embodiments, a second avoidance clearance is formed between the second protruding portion and the current collecting member.

In the foregoing technical solution, the second avoidance clearance is formed between the second protruding portion and the current collecting member to reduce the risk that the current collecting member blocks a degassing channel when the fragile portion is ruptured, ensure smooth degassing, and reduce safety hazards.

In some embodiments, the cap body surrounds the first protruding portion, and the first weld portion is disposed inside the second weld portion.

In some embodiments, a first recessed portion is formed on the end cap at a position corresponding to the first protruding portion, and the first recessed portion is recessed from an outer surface of the cap body toward the electrode assembly. A groove is made on a bottom face of the first recessed portion. A bottom of the groove is configured to be welded to the current collecting member to form the first weld portion.

In the foregoing technical solution, the part of the first protruding portion, which is located between a bottom face of the groove and a top end face of the first protruding portion, forms a connecting portion. The connecting portion is configured to be welded to the current collecting member to form the first weld portion. In this technical solution, the thickness of the connecting portion of the first protruding portion is reduced by the first recessed portion and the groove, thereby reducing the welding power required for welding the connecting portion to the current collecting member, reducing heat emission, and reducing the risk of burning other components.

In some embodiments, the end cap further includes a second protruding portion around the cap body. The second protruding portion protrudes from the inner surface of the cap body toward the first tab. The second protruding portion is configured to support the first tab.

In the foregoing technical solution, the second protruding portion supports the first tab, thereby reducing the shaking amplitude of the electrode assembly during vibration of the battery cell, and improving stability of the electrode assembly.

In some embodiments, an outer side face of the second protruding portion abuts on an inner surface of the housing and is configured to be welded to the housing to close the opening. The sealing is implemented by welding, so as to reduce the risk of leaking an electrolytic solution, and increase the connection strength and flow capacity between the second protruding portion and the housing.

In some embodiments, a second recessed portion is formed on the end cap at a position corresponding to the second protruding portion. The second recessed portion is recessed from an outer surface of the cap body toward the electrode assembly. A bottom face of the second recessed portion is closer to the first tab than the inner surface of the cap body.

In the foregoing technical solution, the second recessed portion can reduce the strength of the second protruding portion and increase elasticity of the second protruding portion. In this way, during welding between the second protruding portion and the housing, the second protruding portion can deform to release the welding stress, thereby reducing the risk of deformation and cracking of the weld region, and improving the sealing performance. On the premise of ensuring an appropriate protrusion amount of the second protruding portion, this technical solution further ensures an appropriate recessing amount of the second recessed portion, so as to increase the elasticity of the second protruding portion and enable the second protruding portion to release the welding stress by deforming.

In some embodiments, a fragile portion is disposed on the cap body. The fragile portion is configured to rupture when an internal pressure of the battery cell reaches a threshold, so as to release the internal pressure.

In this technical solution, the fragile portion is disposed on the cap body to release the internal pressure when the battery cell is thermally runaway, thereby improving the safety performance. In this embodiment, the first avoidance clearance is formed between the current collecting member and the cap body to reduce the risk that the current collecting member blocks a degassing channel when the fragile portion is ruptured, ensure smooth degassing, and reduce safety hazards.

In some embodiments, the current collecting member is a flat plate structure.

In the foregoing technical solution, the flat plate-shaped current collecting member is easier to form. The flat plate-shaped current collecting member can be entirely in contact with the first tab, thereby increasing a flow area, enabling the current collecting member to support the first tab more evenly, and reducing the risk of offset and misalignment of the electrode plate of the electrode assembly in the thickness direction. Further, the flat plate-shaped current collecting member can fit the first protruding portion closely to reduce the risk of generating microcracks on the first protruding portion during the welding, and improve the airtightness and safety.

In some embodiments, the first protruding portion supports the first tab through the current collecting member.

In the foregoing technical solution, the first protruding portion supports the first tab through the current collecting member, thereby reducing the shaking amplitude of the electrode assembly during vibration of the battery cell, and improving stability of the electrode assembly.

In some embodiments, the current collecting member includes: a first current collecting portion, configured to abut on and be welded to the end cap to form the first weld portion; a second current collecting portion, configured to abut on and be welded to the first tab to form the second weld portion. The second current collecting portion is disposed protrusively on a surface that is of the first current collecting portion and that is oriented toward the electrode assembly. An avoidance recess is disposed on the second current collecting portion on a side oriented away from the electrode assembly. The avoidance recess is configured to avoid the second weld portion.

In the foregoing technical solution, the avoidance recess configured to avoid the second weld portion is disposed to prevent the second weld portion from interfering with the abutment between the first current collecting portion and the end cap, ensure sufficient connection strength between the first current collecting portion and the end cap, and reduce the risk that the second weld portion crushes the end cap. The avoidance recess reduces the thickness of the second current collecting portion, thereby reducing the welding power required for welding the second current collecting portion to the first tab, reducing heat emission, and reducing the risk of burning other members.

In some embodiments, the end cap includes: a cap body, configured to be welded to the first current collecting portion to form the first weld portion; and a first protruding portion, disposed around the cap body, and protruding from an inner surface of the cap body toward the first tab. The first protruding portion is configured to abut on the first tab to support the first tab.

In the foregoing technical solution, the second current collecting portion supports a middle region of the first tab, and the first protruding portion supports an edge region of the first tab, thereby improving uniformity of the force on the first tab and reducing the risk of offset and misalignment of the electrode plate of the electrode assembly in the thickness direction.

In some embodiments, a first recessed portion is formed on the end cap at a position corresponding to the first protruding portion. The first recessed portion is recessed from an outer surface of the cap body toward the electrode assembly. A bottom face of the first recessed portion is closer to the first tab than the inner surface of the cap body.

On the premise of ensuring an appropriate protrusion amount of the first protruding portion, the foregoing technical solution further ensures an appropriate recessing amount of the first recessed portion, thereby increasing the elasticity of the first protruding portion, reducing the impact force generated when the first protruding portion approaches and presses the first tab, and reducing the risk of crushing the first tab.

In some embodiments, an outer side face of the first protruding portion abuts on an inner surface of the housing and is configured to be welded to the housing to close the opening.

In the foregoing technical solution, the sealing is implemented by welding, so as to reduce the risk of leaking an electrolytic solution, and increase the connection strength and flow capacity between the first protruding portion and the housing.

In some embodiments, the end cap further includes a second protruding portion. The cap body surrounds the second protruding portion. The second protruding portion protrudes from the inner surface of the cap body toward the first tab, and extends into the avoidance recess. A second recessed portion is formed on the end cap at a position corresponding to the second protruding portion, and the second recessed portion is recessed from an outer surface of the cap body toward the electrode assembly.

By disposing the second protruding portion and the second recessed portion in the middle of the end cap, the foregoing technical solution increases the strength of the end cap and reduces deformation of the end cap.

In some embodiments, a fragile portion is disposed in a region opposite to a bottom face of the second recessed portion on the second protruding portion. The fragile portion is configured to rupture when an internal pressure of the battery cell reaches a threshold, so as to release the internal pressure. The avoidance recess is further configured to separate the second current collecting portion from the fragile portion.

In the foregoing technical solution, the fragile portion is disposed on the second protruding portion to release the internal pressure when the battery cell is thermally runaway, thereby improving the safety performance. The fragile portion is formed in the region opposite to the bottom face of the second recessed portion on the second protruding portion, thereby increasing the distance between the fragile portion and other external components, and reducing the risk that an external component crushes the fragile portion. The avoidance recess can reduce the risk that the current collecting member blocks a degassing channel when the fragile portion is ruptured, ensure smooth degassing, and reduce safety hazards.

In some embodiments, the end cap is configured to electrically connect the first tab to the housing.

In the foregoing technical solution, the housing itself may serve as an output electrode of the battery cell, thereby saving a conventional electrode terminal and simplifying the structure of the battery cell. When a plurality of battery cells are assembled into a group, the housing may be electrically connected to a busbar component, thereby not only increasing the flow area, but also making the structural design of the busbar component more flexible.

In some embodiments, the housing further includes a sidewall and a bottom wall connected to the sidewall. The sidewall extends along the thickness direction of the end cap and is disposed around the electrode assembly. An electrode lead-out hole is disposed on the bottom wall. The electrode assembly further includes a second tab. The first tab and the second tab are of opposite polarities and located at two ends of the electrode assembly respectively. The battery cell further includes an electrode terminal mounted in the electrode lead-out hole, and the electrode terminal is electrically connected to the second tab.

In the foregoing technical solution, the bottom wall and the electrode terminal may serve as two output electrodes of the battery cell respectively, thereby simplifying the structure of the battery cell and ensuring a high flow capacity of the battery cell. The bottom wall and the electrode terminal are located at the same end of the battery cell. In this way, when a plurality of battery cells are assembled in groups, the busbar component may be fitted onto the same side of the battery cell, thereby simplifying the assembling process and improving the assembling efficiency.

In some embodiments, the bottom wall and the sidewall are a one-piece structure. This avoids the step of connecting the bottom wall and the sidewall.

In some embodiments, the first tab is a negative tab, and a substrate material of the housing is steel.

In the foregoing technical solution, the housing is electrically connected to the negative tab, and the housing is in a low-potential state. The steel housing in the low-potential state is not prone to be corroded by an electrolytic solution, thereby reducing safety hazards.

In some embodiments, a substrate material of the housing is identical to a substrate material of the end cap.

In the foregoing technical solution, the substrate material of the housing is identical to the substrate material of the end cap, thereby ensuring sufficient welding strength between the housing and the end cap, and ensuring high airtightness of the battery cell.

In some embodiments, the battery cell is a cylindrical cell.

According to a second aspect, an embodiment of this application provides a battery, including a plurality of battery cells according to any embodiment in the first aspect.

According to a third aspect, an embodiment of this application provides an electrical device, including the battery according to the second aspect. The battery is configured to provide electrical energy.

According to a fourth aspect, an embodiment of this application provides a method for manufacturing a battery cell, including:
providing an electrode assembly, where the electrode assembly includes a first tab;
providing a current collecting member, and welding the current collecting member to the first tab;
providing a housing, where an opening is made on the housing;
mounting the electrode assembly and the current collecting member into the housing so that the first tab is located on the electrode assembly at an end oriented toward the opening;
providing an end cap, and leaving the end cap to fit and cover the opening so that the electrode assembly is sealed in the housing and the current collecting member is disposed between the end cap and the first tab; and
welding the end cap to the current collecting member to implement electrical connection between the end cap and the first tab.

According to a fifth aspect, an embodiment of this application provides a system for manufacturing a battery cell, including:
a first providing apparatus, configured to provide an electrode assembly, where the electrode assembly includes a first tab;
a second providing apparatus, configured to provide a current collecting member, and weld the current collecting member to the first tab;
a third providing apparatus, configured to provide a housing, where an opening is made on the housing;
a first assembling apparatus, configured to mount the electrode assembly and the current collecting member into the housing so that the first tab is located on the electrode assembly at an end oriented toward the opening;
a fourth providing apparatus, configured to provide an end cap, and leave the end cap to fit and cover the opening so that the electrode assembly is sealed in the housing and the current collecting member is disposed between the end cap and the first tab; and
a second assembling apparatus, configured to weld the end cap to the current collecting member to implement electrical connection between the end cap and the first tab.

### BRIEF DESCRIPTION OF DRAWINGS

To describe the technical solutions in the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of the battery module shown in FIG. 2;
FIG. 4 is a schematic exploded view of a battery cell according to some embodiments of this application;
FIG. 5 is a schematic sectional view of a battery cell according to some embodiments of this application;
FIG 6 is a schematic close-up view of a boxed position A of the battery cell shown in FIG. 5;
FIG. 7 is a schematic assembling diagram of a current collecting member and an electrode assembly of a battery cell according to some embodiments of this application;
FIG. 8 is a schematic structural diagram of the electrode assembly shown in FIG. 7;
FIG. 9 is a schematic sectional view of a battery cell according to other embodiments of this application;
FIG. 10 is a schematic sectional view of a battery cell according to still other embodiments of this application;
FIG 11 is a schematic close-up view of a circled position B of the battery cell shown in FIG. 10;
FIG. 12 is a schematic sectional view of a battery cell according to still other embodiments of this application;
FIG. 13 is schematic close-up view of a boxed position C of the battery cell shown in FIG. 12;
FIG. 14 is a schematic flowchart of a method for manufacturing a battery cell according to some embodiments of this application; and
FIG. 15 is a schematic block diagram of a system for manufacturing a battery cell according to some embodiments of this application.

The drawings are not drawn to scale.

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as commonly understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art understands the specific meanings of the terms in this application according to the context.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as a cylinder, flat body, or cuboid, without being limited in embodiments of this application.

The battery mentioned in embodiments of this application means a stand-alone physical module that includes one or more battery cells to provide a higher voltage and a higher capacity. For example, the battery mentioned in this application may include a battery module, a battery pack, or the like. A battery typically includes a box configured to package one or more battery cells. The box can prevent liquid or other foreign matters from affecting the charging or discharging of the battery cells.

A battery cell includes an electrode assembly and an electrolyte. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer overlays a surface of the positive current collector. The positive current collector includes a positive current collecting portion and a positive tab that protrudes beyond the positive current collecting portion. The positive current collecting portion is coated with a positive active material layer, and at least a part of the positive tab is not coated with the positive active material layer. Using a lithium-ion battery as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative current collecting portion and a negative tab that protrudes beyond the negative current collecting portion. The negative current collecting portion is coated with a negative active material layer, and at least a part of the negative tab is not coated with the negative active material layer. The negative current collector may be made of copper. The negative active material layer includes a negative active material. The negative active material may be carbon, silicon, or the like. The separator may be made of a material such as PP (polypropylene, polypropylene) or PE (polyethylene, polyethylene).

The battery cell further includes a housing and an end cap. An opening is made on the housing, and the housing is configured to accommodate the electrode assembly. The electrode assembly may be fitted into the housing through the opening of the housing. The end cap is configured to fit and cover the opening of the housing to implement sealing.

The inventor has tried connecting the end cap electrically to the tab of the electrode assembly to facilitate leading the current out of the electrode assembly. To implement the electrical connection between the end cap and the tab, the inventor welds the end cap to the tab. However, through research, the inventor finds that the end face of the tab in abutment with the end cap is bumpy and can hardly fit the end cap closely. After the end cap is welded to the tab, the end cap may generate microcracks, bring the risk of sealing failure of the end cap, and result in safety hazards.

In view of this, in a technical solution disclosed in an embodiment of this application, a current collecting member is disposed in the battery cell, and the current collecting member is welded to the end cap and the tab separately to implement electrical connection between the end cap and the tab. The current collecting member may fit the end cap closely to reduce the risk of generating microcracks on the end cap, improve sealing performance, and reduce safety hazards. When the current collecting member is welded to the tab, even if microcracks occur on the current collecting member, the airtightness of the battery cell is not affected.

The technical solution described in this embodiment of this application is applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in embodiments of this application.

For ease of description in the following embodiments, a vehicle is used as an example of the electrical device.

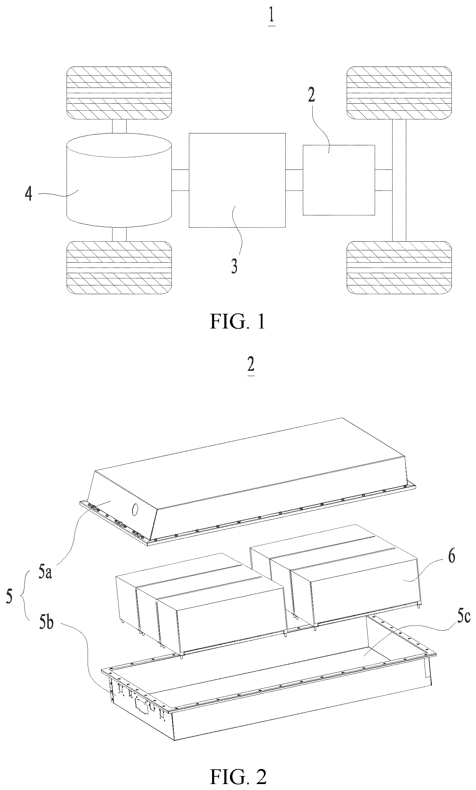

FIG. 1 is a schematic structural diagram of a vehicle according to some embodiments of this application. As shown in FIG. 1, a battery 2 is disposed inside the vehicle 1. The battery 2 may be disposed at the bottom, front, or rear of the vehicle 1. The battery 2 may be configured to supply power to the vehicle 1. For example, the battery 2 may serve as an operating power supply of the vehicle 1.

The vehicle 1 may further include a controller 3 and a motor 4. The controller 3 is configured to control the battery 2 to supply power to the motor 4, for example, to meet electrical energy requirements in starting, navigating, or running the vehicle 1.

In some embodiments of this application, the battery 2 serves not only as an operating power supply of the vehicle 1, but may also serve as a drive power supply of the vehicle 1 to provide driving power for the vehicle 1 in place of or partly in place of oil or natural gas.

FIG. 2 is a schematic exploded view of a battery according to some embodiments of this application. As shown in FIG. 2, the battery 2 includes a box 5 and a battery cell (not shown in FIG. 2). The battery cell is accommodated in the box 5.

The box 5 is configured to accommodate the battery cell. The box 5 may be one of various structures. In some embodiments, the box 5 may include a first box portion 5a and a second box portion 5b. The first box portion 5a and the second box portion 5b fit and cover each other. The first box portion 5a and the second box portion 5b together define an accommodation space 5c configured to accommodate the battery cell. The second box portion 5b may be a hollowed-out structure that is opened at one end. The first box portion 5a is a plate-shaped structure. The first box portion 5a fits and covers the opening of the second box portion 5b to form the box 5 that includes the accommodation space 5c. The first box portion 5a and the second box portion 5b each may be a hollowed-out structure that is opened at one end. The opening of the first box portion 5a fits the opening of the second box portion 5b, so as to form the box 5 with the accommodation space 5c. Definitely, the first box portion 5a and the second box portion 5b may be in various shapes, such as a cylinder or cuboid.

To improve airtightness between the first box portion 5a and the second box portion 5b that are connected, a sealing element such as a sealant or a sealing ring may be disposed between the first box portion 5a and the second box portion 5b.

Assuming that the first box portion 5a fits on the top of the second box portion 5b, the first box portion 5a may also be referred to as an upper box, and the second box portion 5b may also be referred to as a lower box.

There may be one or more battery cells in the battery 2. If there are a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 5. Alternatively, the plurality of battery cells may be connected in series, parallel, or series-and-parallel pattern to form a battery module 6, and then a plurality of battery modules 6 are connected in series, parallel, or series-and-parallel pattern to form a whole for being accommodated in the box 5.

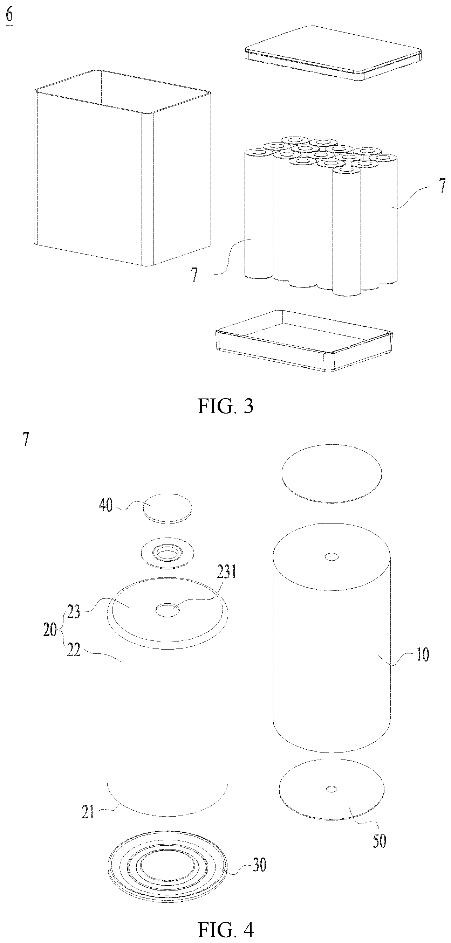

FIG. 3 is a schematic exploded view of the battery module shown in FIG. 2.

In some embodiments, as shown in FIG. 3, there are a plurality of battery cells 7. The plurality of battery cells 7 are connected in series, parallel, or series-and-parallel pattern to form a battery module 6 first. A plurality of battery modules 6 are then connected in series, parallel, or series-and-parallel pattern to form a whole for being accommodated in the box.

The plurality of battery cells 7 in the battery module 6 may be electrically connected by a busbar component, so as to implement parallel connection, series connection, or series-and-parallel connection between the plurality of battery cells 7 in the battery module 6.

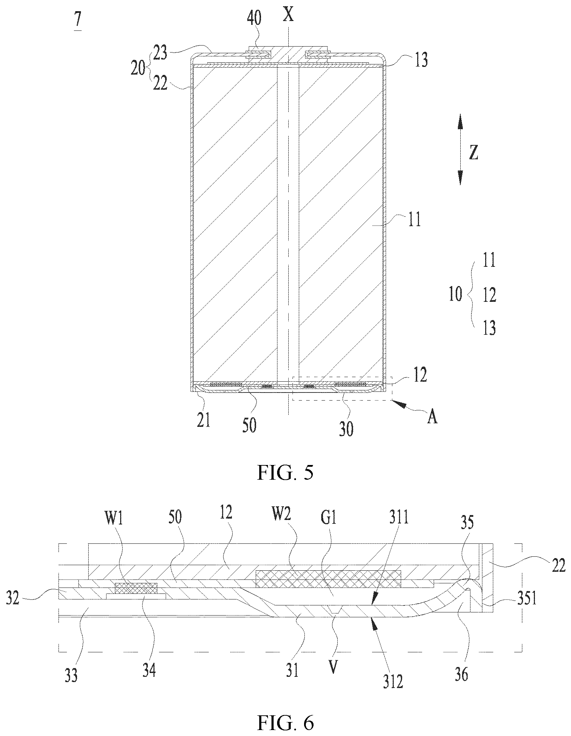

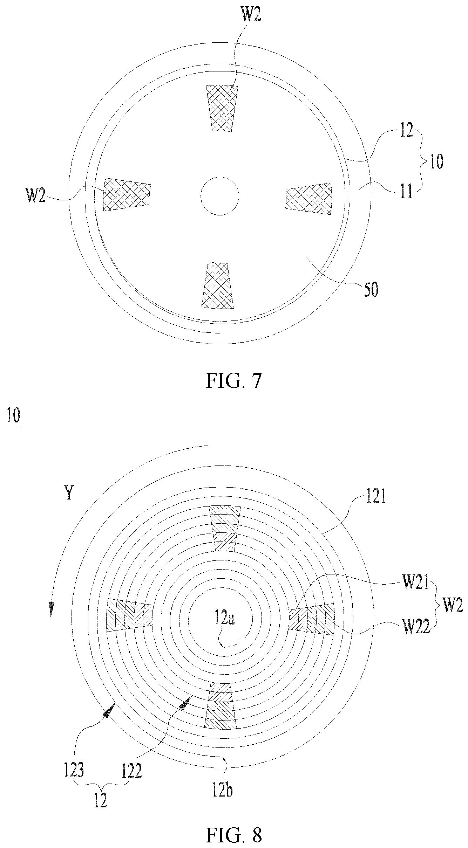

FIG. 4 is a schematic exploded view of a battery cell according to some embodiments of this application; FIG. 5 is a schematic sectional view of a battery cell according to some embodiments of this application; FIG 6 is a schematic close-up view of a boxed position A of the battery cell shown in FIG. 5; FIG. 7 is a schematic assembling diagram of a current collecting member and an electrode assembly of a battery cell according to some embodiments of this application; and FIG. 8 is a schematic structural diagram of the electrode assembly shown in FIG. 7.

As shown in FIG. 4 to FIG. 8, the battery cell 7 according to an embodiment of this application includes: a housing 20, on which an opening 21 is made; an electrode assembly 10, accommodated in the housing 20, where the electrode assembly 10 includes a first tab 12 at an end oriented toward the opening 21; an end cap 30, configured to fit and cover the opening 21 to seal the electrode assembly 10 in the housing 20; a current collecting member 50, disposed between the end cap 30 and the first tab 12, where the current collecting member 50 is configured to be welded to the end cap 30 and the first tab 12 separately to implement electrical connection between the end cap 30 and the first tab 12.

The electrode assembly 10 includes a first electrode plate, a second electrode plate, and a separator. The separator is configured to separate the first electrode plate from the second electrode plate. The first electrode plate and the second electrode plate are of opposite polarities. In other words, one of the first electrode plate or the second electrode plate is a positive electrode plate, and the other of the first electrode plate or the second electrode plate is a negative electrode plate.

Optionally, the first electrode plate, the second electrode plate, and the separator are all ribbon-shaped structures. The first electrode plate, the second electrode plate, and the separator are wound into one piece to form a jelly-roll structure. The jelly-roll structure may be a cylindrical structure, a flat structure, or other shaped structures.

Viewed from the appearance of the electrode assembly 10, the electrode assembly 10 includes a body portion 11, a first tab 12, and a second tab 13. The first tab 12 and the second tab 13 are connected to the body portion 11. The first tab 12 is a part uncoated with the active material layer on the first electrode plate, and the second tab 13 is a part uncoated with the active material layer on the second electrode plate. Correspondingly, one of the first tab 12 or the second tab 13 is a positive tab, and the other is a negative tab.

The first tab 12 and the second tab 13 are disposed at two ends of the body portion 11 respectively. In other words, the first tab 12 and the second tab 13 are disposed at the two ends of the electrode assembly 10 respectively. Optionally, the first tab 12 is located on the electrode assembly 10 at an end oriented toward the end cap 30. The second tab 13 is located on the electrode assembly 10 at an end oriented away from the end cap 30.

The first tab 12 is wound around a central axis X of the electrode assembly 10, and the first tab 12 is approximately column-shaped. The first tab 12 includes N layer structures 121 arranged around the central axis X, where N is a positive integer greater than 1.

Two ends of the first tab 12 along a winding direction Y are an inner end 12a and an outer end 12b respectively. In this embodiment, the layer structures 121 are divided benchmarked against the inner end 12a of the first tab 12.

Specifically, the inner end 12a of the first tab 12 is a start end of the first layer structure 121. A finish end of the first layer structure 121 is aligned with the start end of the first layer structure 121 in a radial direction of the first tab 12. The first layer structure 121 surrounds the central axis X by one circle. Correspondingly, the finish end of the first layer structure 121 is the start end of a second layer structure 121, and so on. The N layer structures 121 are connected end to end along the winding direction Y. In dividing the layer structures 121, the start end of each layer structure 121 is aligned with the inner end 12a of the first tab 12 along the radial direction of the first tab 12. The radial direction of the first tab 12 is perpendicular to the central axis X, and runs through the central axis X.

Illustratively, the inner end 12a is aligned with the outer end 12b of the first tab 12 in the radial direction of the first tab 12. In this way, each layer structure 121 surrounds the central axis X by one circle.

Definitely, alternatively, the inner end 12a may be not aligned with the outer end 12b of the first tab 12 in the radial direction of the first tab 12. In this way, the last layer structure 121 surrounds the central axis X by less than one circle. For example, the last layer structure 121 may surround the central axis X by 1/4 circle, 1/3 circle, 1/2 circle, 2/3 circle, or 3/4 circle.

After completion of the winding, the first tab 12 is approximately column-shaped, and a gap is left between two adjacent layer structures 121. In this embodiment of this application, the first tab 12 may be processed to reduce the gap between the layer structures 121 and facilitate the connection between the first tab 12 and the current collecting member 50. For example, in this embodiment of this application, the first tab 12 may be kneaded and flattened, so that an end region that is of the first tab 12 and that is oriented away from the body portion 11 can be tucked and collected together. The kneading and flattening lead to formation of a densified end face at the end that is of the first tab 12 and that is oriented away from the body portion 11, thereby reducing the gap between the layer structures 121 and facilitating the connection between the first tab 12 and the current collecting member 50. Alternatively, in this embodiment of this application, a conductive material may fill the gap between the two adjacent layer structures 121 to reduce the gap between the layer structures 121.

Optionally, the second tab 13 is wound around the central axis X of the electrode assembly 10 in circles, so that the second tab 13 includes a plurality of layer structures. Illustratively, the second tab 13 is also kneaded and flattened to reduce the gap between the layer structures of the second tab 13.

The housing 20 is a hollowed-out structure opened at one end. The end cap 30 fits on, and is hermetically connected to, the opening 21 of the housing 20, to form an accommodation cavity configured to accommodate the electrode assembly 10 and the electrolytic solution.

The housing 20 is a structure hollowed out to form a space configured to accommodate the electrode assembly 10. The housing 20 may be in various shapes such as a cylinder or cuboid. The shape of the housing 20 may be determined depending on the specific shape of the electrode assembly 10. For example, if the electrode assembly 10 is a cylindrical structure, the housing may be a cylindrical housing. If the electrode assembly 10 is a cuboidal structure, the housing may be a cuboidal housing.

The housing 20 includes a sidewall 22 and a bottom wall 23. The sidewall 22 surrounds the electrode assembly 10, and the bottom wall 23 is connected to an end of the sidewall 22. The sidewall 22 is a cylindrical structure. For example, the sidewall 22 is a cylinder or a rectangular column. The bottom wall 23 is a plate-shaped structure, the shape of which corresponds to the shape of the sidewall 22. Optionally, an opening 21 is formed at one end of the sidewall 22. The bottom wall 23 is connected to an end that is of the sidewall 22 and that is oriented away from the opening 21.

The sidewall 22 and the bottom wall 23 may be an integrally formed structure. That is, the housing 20 is a one-piece member. Definitely, the sidewall 22 and the bottom wall 23 may be two stand-alone members provided separately, and may be connected together by welding, riveting, bonding, or other means.

The housing 20 may be positively charged, negatively charged, or uncharged. To make the housing 20 charged, the housing 20 may be directly connected to the tab of the electrode assembly 10, or may be electrically connected to the tab through other conductive members.

The end cap 30 and the housing 20 may be connected by welding, so that the end cap 30 and the housing 20 are of the same polarity. Illustratively, to make the housing 20 positively charged, the housing 20 may be electrically connected to the positive tab by using the end cap 30. To make the housing 20 negatively charged, the housing 20 may be electrically connected to the negative tab by using the end cap 30. Definitely, the housing 20 may be connected to the tab by other conductive structures instead, without being limited in this embodiment.

The housing 20 and the end cap 30 may be made of the same material, or made of different materials.

The current collecting member 50 can implement conduction between the end cap 30 and the first tab 12, so that the end cap 30 and the first tab 12 are of the same polarity. Optionally, the current collecting member 50 is a plate-shaped structure made of a metal material.

During assembling of the battery cell 7, the current collecting member 50 is welded to the first tab 12 first. For example, the current collecting member 50 may be pressed against the first tab 12 first, and then a laser beam is radiated onto a surface that is of the current collecting member 50 and that is oriented away from the first tab 12. The laser beam melts and connects a part of the current collecting member 50 and a part of the first tab 12.

After the electrode assembly 10 and the current collecting member 50 are mounted into the housing 20, the end cap 30 fits onto the opening 21 of the housing 20, and then the end cap 30 is welded to the current collecting member 50. For example, a laser beam is radiated onto the surface that is of the end cap 30 and that is oriented away from the current collecting member 50. The laser beam melts and connects a part of the end cap 30 and a part of the current collecting member 50.

At least a part of the current collecting member 50 abuts on and fits closely with the end cap 30 to facilitate the welding between the current collecting member 50 and the end cap 30. Optionally, the surface that is of the current collecting member 50 and that abuts on the end cap 30 is a flat face.

The current collecting member 50 is an independently formed member. Different from the first tab 12 formed by winding, the shape of the current collecting member 50 is adaptable to the shape of the end cap 30 to ensure the close fitting of the current collecting member 50 to the end cap 30.

In this embodiment, the current collecting member 50 is welded to the end cap 30 and the first tab 12 separately to implement electrical connection between the end cap 30 and the first tab 12. The current collecting member 50 may fit the end cap 30 closely to reduce the risk of generating microcracks on the end cap 30, improve sealing performance, reduce safety hazards, and improve safety. When the current collecting member 50 is welded to the first tab 12, even if microcracks occur on the current collecting member 50, the airtightness of the battery cell 7 is not affected.

In some embodiments, the end cap 30 is configured to electrically connect the first tab 12 to the housing 20.

In this embodiment, the housing 20 itself may serve as an output electrode of the battery cell 7, thereby saving a conventional electrode terminal and simplifying the structure of the battery cell 7. When a plurality of battery cells 7 are assembled into a group, the housing 20 may be electrically connected to a busbar component, thereby not only increasing the flow area, but also making the structural design of the busbar component more flexible.

In some embodiments, the housing 20 is welded to the end cap 30. The welding not only implements the connection between the housing 20 and the end cap 30, improves the flow capacity between the housing 20 and the end cap 30, but also ensures airtightness.

In some embodiments, the housing 20 further includes a sidewall 22 and a bottom wall 23 connected to the sidewall 22. The sidewall 22 extends along the thickness direction Z of the end cap 30 and is disposed around the electrode assembly 10. An electrode lead-out hole 231 is disposed on the bottom wall 23. The electrode assembly 10 further includes a second tab 13. The first tab 12 and the second tab 13 are of opposite polarities and located at two ends of the electrode assembly 10 respectively. The battery cell 7 further includes an electrode terminal 40 mounted in the electrode lead-out hole 231, and the electrode terminal 40 is electrically connected to the second tab 13.

The second tab 13 may be directly electrically connected to the electrode terminal 40, or may be indirectly electrically connected to the electrode terminal 40 by other conductive structures.

The electrode terminal 40 is dielectrically disposed on the bottom wall 23. The electrode terminal 40 and the bottom wall 23 may be of different polarities. The electrode terminal 40 and the bottom wall 23 may serve as two output electrodes of the battery cell 7 respectively.

In a case that the first tab 12 is a negative tab and the second tab 13 is a positive tab, the bottom wall 23 is a negative output electrode of the battery cell 7, and the electrode terminal 40 is a positive output electrode of the battery cell 7. In a case that the first tab 12 is a positive tab and the second tab 13 is a negative tab, the bottom wall 23 is a positive output electrode of the battery cell 7, and the electrode terminal 40 is a negative output electrode of the battery cell 7.

The electrode terminal 40 is fixed onto the bottom wall 23. The electrode terminal 40 may be fixed as a whole onto the outer side of the bottom wall 23, or may extend into the interior of the housing 20 through the electrode lead-out hole 231.

The first tab 12 is located on the electrode assembly 10 at an end oriented toward the end cap 30, so as to facilitate electrical connection between the end cap 30 and the first tab 12. Correspondingly, the second tab 13 is located on the electrode assembly 10 at an end oriented toward the bottom wall 23, so as to facilitate electrical connection between the electrode terminal 40 and the second tab 13. In this embodiment of this application, the first tab 12 and the second tab 13 are disposed at the two ends of the electrode assembly 10 respectively, thereby reducing the risk of conduction between the first tab 12 and the second tab 13, and increasing the flow area of both the first tab 12 and the second tab 13.

In this embodiment, the bottom wall 23 and the electrode terminal 40 may serve as two output electrodes of the battery cell 7 respectively, thereby simplifying the structure of the battery cell 7 and ensuring a high flow capacity of the battery cell 7. The bottom wall 23 and the electrode terminal 40 are located at the same end of the battery cell 7. In this way, when a plurality of battery cells 7 are assembled in groups, the busbar component may be fitted onto the same side of the battery cell 7, thereby simplifying the assembling process and improving the assembling efficiency.

In some embodiments, the bottom wall 23 and the sidewall 22 are a one-piece structure. This embodiment avoids the step of connecting the bottom wall 23 and the sidewall 22. The housing 20 may be formed by a stretching process.

The electrode lead-out hole 231 in this embodiment of this application is made after the housing 20 is formed by stretching.

The inventor hereof has tried an opening end of a housing that is made by calendering, in an attempt to fold the opening end of the housing inward to form a flanged structure. The flanged structure presses against the end cap to fix the end cap. The inventor mounts the electrode terminal onto the end cap, and uses the flanged structure and the electrode terminal as two output electrodes of the battery cell respectively. However, the larger the size of the flanged structure, the higher the risk of curling and wrinkling that the flanged structure incurs after the flanged structure is formed. The curling and wrinkling of the flanged structure lead to a bumpy surface of the flanged structure and, when the flanged structure is welded to the busbar component, result in poor welding. Therefore, the size of the flanged structure is relatively limited, resulting in an insufficient flow capacity of the battery cell.

In this embodiment, an electrode lead-out hole 231 configured to mount the electrode terminal 40 is formed on the bottom wall 23 by a hole-opening process, so as to dispose the positive output electrode and the negative output electrode on the battery cell 7 at an end oriented away from the opening 21. The bottom wall 23 is formed during the formation of the housing 20, so as to ensure flatness of the bottom wall 23 and high connection strength between the bottom wall 23 and the busbar component after the electrode lead-out hole 231 is made. At the same time, the flatness of the bottom wall 23 is not restricted by the size of the bottom wall. Therefore, the size of the bottom wall 23 may be relatively large, thereby improving the flow capacity of the battery cell 7.

In some embodiments, the first tab 12 is a negative tab, and a substrate material of the housing 20 is steel.

The housing 20 is electrically connected to the negative tab. That is, the housing 20 is in a low-potential state. The steel housing 20 in the low-potential state is not prone to be corroded by an electrolytic solution, thereby reducing safety hazards.

In some embodiments, the substrate material of the housing 20 is identical to the substrate material of the end cap 30. Optionally, both the substrate material of the housing 20 and the substrate material of the end cap 30 are steel.

In this embodiment, the substrate material of the housing 20 is identical to the substrate material of the end cap 30, thereby ensuring sufficient welding strength between the housing 20 and the end cap 30, and ensuring the airtightness of the battery cell 7.

In some embodiments, the battery cell 7 is a cylindrical cell. Correspondingly, the electrode assembly 10 is a cylindrical structure, and the housing 20 is a cylindrical hollowed-out structure.

In some embodiments, a part of the current collecting member 50 is configured to abut on and be welded to the end cap 30 to form a first weld portion W1, and another part of the current collecting member 50 is configured to abut on and be welded to the first tab 12 to form a second weld portion W2. A projection of the first weld portion W1 along a thickness direction Z of the end cap 30 does not overlap a projection of the second weld portion W2 along the thickness direction Z of the end cap 30.

In this embodiment, two different parts of the current collecting member 50 are welded to the end cap 30 and the first tab 12 respectively, so that the projection of the first weld portion W1 along the thickness direction Z of the end cap 30 does not overlap the projection of the second weld portion W2 along the thickness direction Z of the end cap 30.

The first weld portion W1 and the second weld portion W2 are structures formed by melting, cooling, and solidifying the materials or by other processes, and have bumpy and rough surfaces.

During assembling of the battery cell 7, the current collecting member 50 is pressed against and welded to the first tab 12 to form the second weld portion W2, and then the end cap 30 is welded to the current collecting member 50 to form the first weld portion W1. If the projection of the first weld portion W1 along the thickness direction Z of the end cap 30 overlaps the projection of the second weld portion W2 along the thickness direction Z of the end cap 30, the part of the end cap 30, which is to be welded to the current collecting member 50, needs to be pressed against the second weld portion W2 during the welding between the end cap 30 and the current collecting member 50. Because the surface of the second weld portion W2 is bumpy and rough, if the part of the end cap 30, which is to be welded to the current collecting member 50, is pressed against the second weld portion W2, the end cap 30 can hardly fit the second weld portion W2 closely, thereby resulting in poor welding, impairing the connection strength between the end cap 30 and the current collecting member 50, and bringing the risk of generating microcracks on the end cap 30.

In this embodiment, the projection of the first weld portion W1 along the thickness direction Z of the end cap 30 does not overlap the projection of the second weld portion W2 along the thickness direction Z of the end cap 30, so that the welding between the end cap 30 and the current collecting member 50 is not affected by the second weld portion W2, thereby improving reliability of the welding between the end cap 30 and the current collecting member 50.

In some embodiments, the electrode assembly 10 is wound around a central axis X to form the first tab 12. The first tab 12 includes N layer structures 121 arranged around the central axis X. An extension direction of the central axis X is parallel to the thickness direction Z of the end cap 30. The first tab 12 is formed of a first annular portion 122 and a second annular portion 123 around the first annular portion 122. The number of the layer structures 121 in the first annular portion 122 is N1, the number of the layer structures 121 in the second annular portion 123 is N2, N = N1 + N2, |N1-N2| is less than or equal to 2, and N1 and N2 are positive integers. The first annular portion 122 is welded to the current collecting member 50 to form a first part W21. The second annular portion 123 is welded to the current collecting member 50 to form a second part W22 connected to the first part W21. The second weld portion W2 is formed of the first part W21 and the second part W22.

Each layer structure 121 in the first annular portion 122 surrounds the central axis X by one circle. A junction between the first annular portion 122 and the second annular portion 123 is aligned with the inner end 12a of the first tab 12 along a radial direction.

Electrons in the region corresponding to the first annular portion 122 in the electrode assembly 10 can move along a first current path formed by the first annular portion 122, the first part W21, the current collecting member 50, the first weld portion W1, and the end cap 30. Electrons in the region corresponding to the second annular portion 123 in the electrode assembly 10 can move along a second current path formed by the second annular portion 123, the second part W22, the current collecting member 50, the first weld portion W1, and the end cap 30. In addition, a boundary between the first annular portion 122 and the second annular portion 123 is approximately located in a middle region of the first tab along the radial direction.

In this embodiment, the boundary between the first annular portion 122 and the second annular portion 123 is approximately located in the middle region of the first tab 12 along the radial direction. Some layer structures 121 in the middle region of the first tab 12 are welded to the current collecting member 50 to form a part of the second weld portion W2, thereby reducing the difference between the first current path and the second current path to some extent, and in turn, improving uniformity of a current density, reducing an internal resistance, and increasing a flow capacity.

In some embodiments, N3 continuous layer structures 121 disposed near the second annular portion 123 in the first annular portion 122 are welded to the current collecting member 50 to form the first part W21. N4 continuous layer structures 121 disposed near the first annular portion 122 in the second annular portion 123 are welded to the current collecting member 50 to form the second part W22. The N3 continuous layer structures 121 and the N4 continuous layer structures 121 are arranged continuously, N4 > N3 ≥ 1, and N3 and N4 are positive integers.

Because the second annular portion 123 surrounds the first annular portion 122, a perimeter of the layer structure 121 in the second annular portion 123 is greater than a perimeter of the layer structure 121 in the first annular portion 122. The electrons in the region corresponding to the second annular portion 123 in the electrode assembly 10 travel a relatively long path between the layer structures 121 of the second annular portion 123. In this embodiment, N4 is greater than N3, thereby increasing the layer structures 121 connected to the second part W22, and reducing the transmission of electrons between the layer structures 121 of the second annular portion 123. This shortens the second current path, and further reduces the difference between the first current path and the second current path, and in turn, improves the uniformity of the current density, reduces the internal resistance, and increases the flow capacity.

In some embodiments, M continuous layer structures 121 in all the layer structures 121 are welded to the current collecting member 50 to form the second weld portion W2, where 1/3 ≤ M/N ≤ 1/2, M ≥ 2, and M is a positive integer.

Optionally, M = N3 + N4.

The greater the value of M/N, the lower the internal resistance of the first tab 12, the larger the area of the second weld portion W2, and the higher the flow capacity between the first tab 12 and the current collecting member 50. However, when the area of the current collecting member 50 is constant, the greater the value of M/N, the smaller the area of the first weld portion W1, and the lower the flow capacity between the current collecting member 50 and the end cap 30.

Based on tests, the inventor restricts the value of M/N to a range of 1/3 to 1/2, so that the flow capacity between the first tab 12 and the current collecting member 50 is balanced against the flow capacity between the current collecting member 50 and the end cap 30, and the flow capacity of the battery cell 7 is optimized.

In some embodiments, there are a plurality of second weld portions W2. The plurality of second weld portions W2 are spaced out along a circumferential direction of the first tab 12. Definitely, this application is not limited such an example. In other embodiments, there may be just one second weld portion W2. For example, the second weld portion W2 may be annular, spiral, or linear in shape.

In some embodiments, the end cap 30 includes a cap body 31 and a first protruding portion 32 that protrudes from the inner surface 311 of the cap body toward the first tab 12.

The cap body 31 is a plate-shaped structure, and includes an inner surface and an outer surface that are disposed opposite to each other along the thickness direction Z. The inner surface 311 of the cap body faces the electrode assembly 10. Optionally, the inner surface 311 of the cap body and the outer surface 312 of the cap body are both flat faces and parallel to each other.

The first protruding portion 32 protrudes toward the electrode assembly 10 against the inner surface 311 of the cap body, so that at least a part of the first protruding portion 32 protrudes from the inner surface 311 of the cap body. This embodiment does not limit the amount by which the first protruding portion 32 protrudes from the inner surface 311 of the cap body.

The first protruding portion 32 is connected to the cap body 31. Illustratively, the first protruding portion 32 is an annular structure around the cap body 31. Definitely, alternatively, the cap body 31 may surround the first protruding portion 32.

The current collecting member 50 may be welded to the first protruding portion 32 or welded to the cap body 31, without being limited in this embodiment.

In some embodiments, the end cap 30 includes a cap body 31 and a first protruding portion 32 that protrudes from the inner surface 311 of the cap body toward the first tab 12. The first protruding portion 32 is configured to abut on and be welded to the current collecting member 50 to form the first weld portion W1, and form a first avoidance clearance G1 between the current collecting member 50 and the cap body 31 to avoid the second weld portion W2.

A top end face of the first protruding portion 32 presses against and supports the current collecting member 50 to space out at least the cap body 31 and the current collecting member 50 in the thickness direction Z.

The projection of the second weld portion W2 along the thickness direction Z at least partly overlaps the projection of the cap body 31 along the thickness direction Z. Optionally, the projection of the second weld portion W2 along the thickness direction Z is located within the projection of the cap body 31 along the thickness direction Z.

In this embodiment, the first avoidance clearance G1 configured to avoid the second weld portion W2 is disposed to prevent the second weld portion W2 from abutting on the cap body 31, and reduce the risk that the second weld portion W2 crushes the cap body 31. If the second weld portion W2 abuts on the cap body 31, over-positioning may be formed between the end cap 30 and the current collecting member 50, and the second weld portion W2 may interfere with the abutment between the first protruding portion 32 and the current collecting member 50. In this embodiment, the first avoidance clearance G1 prevents the second weld portion W2 from interfering with the abutment between the first protruding portion 32 and the current collecting member 50, and ensures sufficient connection strength between the first protruding portion 32 and the current collecting member 50.

In some embodiments, a first recessed portion 33 is formed on the end cap 30 at a position corresponding to the first protruding portion 32, and the first recessed portion is recessed from an outer surface 312 of the cap body toward the electrode assembly 10.

During assembling of the end cap 30 and the current collecting member 50, the laser beam may be applied to a bottom face of the first recessed portion 33, so as to weld the first protruding portion 32 and the current collecting member 50 from outside. This embodiment reduces the thickness of the first protruding portion 32 by disposing the first recessed portion 33, thereby reducing the welding power required for welding the first protruding portion 32 to the current collecting member 50, reducing heat emission, and reducing the risk of burning other components.

The first protruding portion 32 is a solid structure with a specific thickness. Illustratively, the first protruding portion 32 is a thin-walled structure. The first recessed portion 33 is a cavity without a solid structure.

The first recessed portion 33 can reduce the strength of the first protruding portion 32, and increase elasticity of the first protruding portion 32. In this way, in a process of the first protruding portion 32 approaching and pressing the current collecting member 50, the first protruding portion 32 can deform to release a stress, reduce an impact force, and reduce the risk of crushing the current collecting member 50 and the first tab 12.

In some embodiments, a bottom face of the first recessed portion 33 is closer to the first tab 12 than the inner surface 311 of the cap body.

The first recessed portion 33 and the first protruding portion 32 may be formed by stamping the end cap 30. The greater the depth of the first recessed portion 33 along the thickness direction Z, the larger the amount by which the first protruding portion 32 protrudes from the inner surface 311 of the cap body, and the larger the first avoidance clearance G1.

This embodiment of this application ensures an appropriate amount by which the first protruding portion 32 protrudes from the inner surface 311 of the cap body, so as to more effectively support the current collecting member 50, and reduce the risk that the second weld portion W2 contacts the end cap 30. At the same time, on the premise of ensuring an appropriate protrusion amount of the first protruding portion 32, this embodiment of this application further ensures an appropriate recessing amount of the first recessed portion 33, thereby increasing elasticity of the first protruding portion 32 and reducing the risk that the first protruding portion 32 crushes the current collecting member 50 and the first tab 12 during assembling.

In some embodiments, the cap body 31 surrounds the first protruding portion 32, and the first weld portion W1 is disposed inside the second weld portion W2.

In this embodiment, the terms "inside" and "outside" indicate positions relative to the central axis X. The first protruding portion 32 is closer to the central axis X than the cap body 31, and the first weld portion W1 is closer to the central axis X than the second weld portion W2.

In some embodiments, a first recessed portion 33 is formed on the end cap 30 at a position corresponding to the first protruding portion 32, and the first recessed portion is recessed from an outer surface 312 of the cap body toward the electrode assembly 10. A groove 34 is made on a bottom face of the first recessed portion 33. A bottom of the groove 34 is configured to be welded to the current collecting member 50 to form the first weld portion W1.

The groove 34 is recessed from the bottom face of the first recessed portion 33 toward the electrode assembly 10. The part of the first protruding portion 32, which is located between a bottom face of the groove 34 and a top end face of the first protruding portion 32, forms a connecting portion. The connecting portion is configured to be welded to the current collecting member 50 to form the first weld portion W1.

This embodiment reduces the thickness of the connecting portion of the first protruding portion 32 by disposing the first recessed portion 33 and the groove 34, thereby reducing the welding power required for welding the connecting portion to the current collecting member 50, reducing heat emission, and reducing the risk of burning other components (such as a separator).

In some embodiments, the end cap 30 further includes a second protruding portion 35 around the cap body 31. The second protruding portion 35 protrudes from the inner surface 311 of the cap body toward the first tab 12. The second protruding portion 35 is configured to support the first tab 12.

The second protruding portion 35 is an annular structure around the cap body 31. In the radial direction, the second protruding portion 35 is closer to the sidewall 22 than the cap body 31.

The second protruding portion 35 may directly support the first tab 12, or support the first tab 12 through other members (such as the current collecting member 50).

In this embodiment, the second protruding portion 35 supports the first tab 12, thereby reducing the shaking amplitude of the electrode assembly 10 during vibration of the battery cell 7, and improving stability of the electrode assembly 10.

In some embodiments, the second protruding portion 35 directly abuts and supports the first tab 12.

In some embodiments, the second protruding portion 35 is spaced apart from the current collecting member 50 to prevent the second protruding portion 35 from interfering with the abutment between the current collecting member 50 and the first protruding portion 32, and to ensure that the first protruding portion 32 closely fits the current collecting member 50.

Optionally, the second protruding portion 35 surrounds the current collecting member 50.

In some embodiments, an outer side face 351 of the second protruding portion abuts on an inner surface of the housing 20 and is configured to be welded to the housing 20 to close the opening 21.

The outer side face 351 of the second protruding portion is a surface of the second protruding portion 35, where the surface is oriented toward the sidewall 22 of the housing 20. The outer side face 351 of the second protruding portion is a column face. Optionally, the outer side face 351 of the second protruding portion is a cylindrical face.

The part of the second protruding portion 35, which protrudes into the housing 20, may be in interference fit, transition fit, or clearance fit with the housing 20. Optionally, the part of the second protruding portion 35, which protrudes into the housing 20, may be in interference fit with the housing 20. The interference fit increases connection strength between the housing 20 and the end cap 30, and improves the sealing performance.

Optionally, the second protruding portion 35 and the sidewall 22 of the housing 20 are connected by laser welding. During the welding, a laser beam is radiated on a junction between the second protruding portion 35 and the sidewall 22. The laser beam melts and connects together at least a part of the outer side face 351 of the second protruding portion and a part of the inner surface of the housing 20. The outer side face 351 of the second protruding portion abuts on the inner surface of the housing 20, thereby reducing the risk of burning the electrode assembly 10 by the laser beam radiated into the housing 20.

Alternatively, the laser beam may be radiated on an outer surface of the sidewall 22, where the outer surface is oriented away from the second protruding portion 35.

In this embodiment, the sealing is implemented by welding, so as to reduce the risk of leaking an electrolytic solution, and increase the connection strength and flow capacity between the second protruding portion 35 and the housing 20.

In some embodiments, a second recessed portion 36 is formed on the end cap 30 at a position corresponding to the second protruding portion 35, and the second recessed portion is recessed from an outer surface 312 of the cap body toward the electrode assembly 10.

The second recessed portion 36 can reduce the strength of the second protruding portion 35 and increase elasticity of the second protruding portion 35. In this way, during welding between the second protruding portion 35 and the housing 20, the second protruding portion 35 can deform to release the welding stress, thereby reducing the risk of deformation and cracking of the weld region, and improving the sealing performance.

In some embodiments, a bottom face of the second recessed portion 36 is closer to the first tab 12 than the inner surface 311 of the cap body.

The second recessed portion 36 and the second protruding portion 35 may be formed by stamping the end cap 30. The greater the depth of the second recessed portion 36 along the thickness direction Z, the larger the amount by which the second protruding portion 35 protrudes from the inner surface 311 of the cap body.

This embodiment of this application ensures an appropriate amount by which the second protruding portion 35 protrudes from the inner surface 311 of the cap body, so as to support the first tab 12. At the same time, on the premise of ensuring an appropriate protrusion amount of the second protruding portion 35, this embodiment of this application further ensures an appropriate recessing amount of the second recessed portion 36, so as to increase the elasticity of the second protruding portion 35 and enable the second protruding portion 35 to release the welding stress by deforming.

In some embodiments, a fragile portion V is disposed on the cap body 31. The fragile portion V is configured to rupture when an internal pressure of the battery cell 7 reaches a threshold, so as to release the internal pressure.

The threshold may vary depending on design requirements. The threshold may depend on the material of one or more of the positive electrode plate, the negative electrode plate, the electrolytic solution, or the separator in the battery cell 7.

After the fragile portion V is ruptured, a channel for releasing the internal pressure is formed. After the fragile portion V is ruptured, high-temperature and high-pressure substances inside the battery cell 7 are expelled as emissions out of the ruptured position. In this way, the pressure of the battery cell 7 is released under a circumstance of a controllable pressure to avoid potential severer accidents. The emissions out of the battery cell 7 mentioned in this application include but are not limited to: electrolytic solution, melted or split positive and negative electrode plates, fragments of the separator, reaction-induced high-temperature and high-pressure gases, flames, and the like.

By disposing the fragile portion V on the cap body 31, this embodiment releases the internal pressure when the battery cell 7 is thermally runaway, thereby improving the safety performance. In this embodiment, the first avoidance clearance G1 is formed between the current collecting member 50 and the cap body 31 to reduce the risk that the current collecting member 50 blocks a degassing channel when the fragile portion V is ruptured, ensure smooth degassing, and reduce safety hazards.

In some embodiments, the current collecting member 50 is a flat plate structure. The flat plate-shaped current collecting member 50 is easier to form. The flat plate-shaped current collecting member 50 can be entirely in contact with the first tab 12, thereby increasing a flow area, enabling the current collecting member 50 to support the first tab 12 more evenly, and reducing the risk of offset and misalignment of the electrode plate of the electrode assembly 10 in the thickness direction Z. Further, the flat plate-shaped current collecting member 50 can fit the first protruding portion 32 closely to reduce the risk of generating microcracks on the first protruding portion 32 during the welding, and improve the airtightness and safety.

In some embodiments, the first protruding portion 32 supports the first tab 12 through the current collecting member 50.

In this embodiment, the first protruding portion 32 supports the first tab 12 through the current collecting member 50, thereby reducing the shaking amplitude of the electrode assembly 10 during vibration of the battery cell 7, and improving stability of the electrode assembly 10. The current collecting member 50 can support the electrode assembly 10 through the first tab 12, so as to reduce the risk of offset and misalignment of the electrode plate of the electrode assembly 10 in the thickness direction Z.

The first protruding portion 32 supports a middle region of the first tab 12 through the current collecting member 50, and the second protruding portion 35 supports an edge region of the first tab 12, thereby improving uniformity of the force on the first tab 12 and reducing the risk of offset and misalignment of the electrode plate of the electrode assembly 10 in the thickness direction Z.

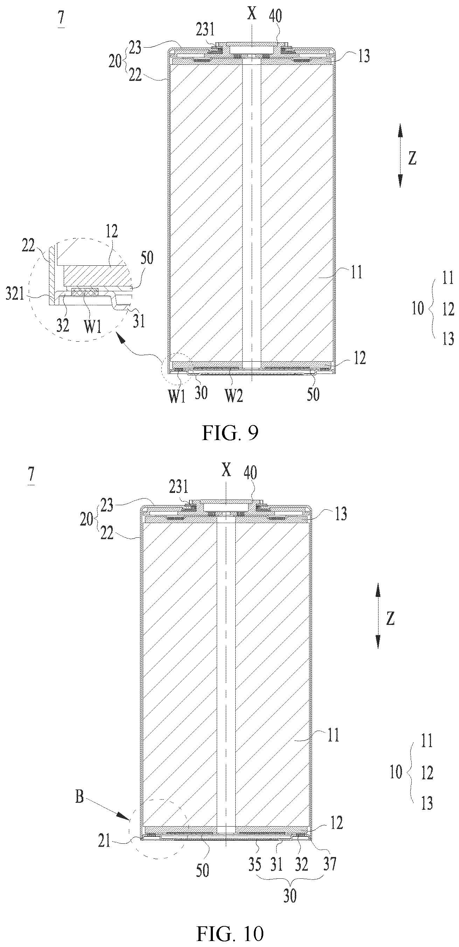

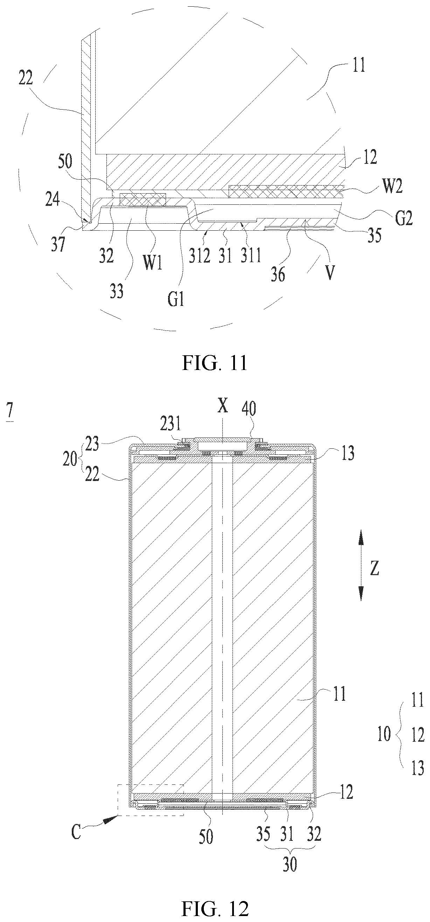

FIG. 9 is a schematic sectional view of a battery cell according to other embodiments of this application; FIG. 10 is a schematic sectional view of a battery cell according to still other embodiments of this application; and FIG 11 is a schematic close-up view of a circled position B of the battery cell shown in FIG. 10.

As shown in FIG. 9, in some embodiments, the first protruding portion 32 surrounds the cap body 31, and the first weld portion W1 is disposed outside the second weld portion W2.

In this embodiment, the term "outside" indicates a position relative to the central axis X. The cap body 31 is closer to the central axis X than the first protruding portion 32, and the second weld portion W2 is closer to the central axis X than the first weld portion W1.

In some embodiments, an outer side face 321 of the first protruding portion abuts on an inner surface of the housing 20 and is configured to be welded to the housing 20 to close the opening.

The outer side face 321 of the first protruding portion is a surface of the first protruding portion 32, where the surface is oriented toward the sidewall 22 of the housing 20. The outer side face 321 of the first protruding portion is a column face. Optionally, the outer side face 321 of the first protruding portion is a cylindrical face.

The part of the first protruding portion 32, which protrudes into the housing 20, may be in interference fit, transition fit, or clearance fit with the housing 20. Optionally, the part of the first protruding portion 32, which protrudes into the housing 20, may be in interference fit with the housing 20. The interference fit increases connection strength between the housing 20 and the end cap 30, and improves the sealing performance.

Optionally, the first protruding portion 32 and the sidewall 22 of the housing 20 are connected by laser welding. During the welding, a laser beam is radiated on a junction between the first protruding portion 32 and the sidewall 22. The laser beam melts and connects together at least a part of the outer side face 321 of the first protruding portion and a part of the inner surface of the housing 20. The outer side face 321 of the first protruding portion abuts on the inner surface of the housing 20, thereby reducing the risk of burning the electrode assembly 10 by the laser beam radiated into the housing 20.

Alternatively, the laser beam may be radiated on an outer surface of the sidewall 22, where the outer surface is oriented away from the first protruding portion 32.

In this embodiment, the sealing is implemented by welding, so as to reduce the risk of leaking an electrolytic solution, and increase the connection strength and flow capacity between the housing 20 and the first protruding portion 32.

As shown in FIG. 10 and FIG. 11, in some embodiments, the end cap 30 further includes an extension portion 37 around the first protruding portion 32. A surface that is of the extension portion 37 and that is oriented toward the first tab 12 abuts on and is welded to an end face 24 of the housing 20 around the opening 21 to close the opening 21.

The extension portion 37 includes an inner surface and an outer surface that are disposed opposite to each other along the thickness direction Z. The inner surface of the extension portion 37 faces the first tab 12. Optionally, the extension portion 37 is an annular plate-shaped structure. The inner surface of the extension portion 37 and the outer surface of the extension portion 37 are both flat faces.

The extension portion 37 and the housing 20 are arranged along the thickness direction Z. The inner surface of the extension portion 37 may be parallel to the end face 24 of the housing 20.

Optionally, during welding, the laser beam is radiated at a junction between the end face 24 of the housing 20 and the inner surface of the extension portion 37. After completion of welding, at least a part of the inner surface of the extension portion 37 and at least a part of the end face 24 of the housing 20 are melted and connected together.

In this embodiment, in a process of fitting the end cap 30 onto the housing 20, the end face 24 of the housing 20 serves a function of limiting the position in the thickness direction Z, thereby reducing the risk of excessive insertion of the end cap 30 into the housing 20, and improving the assembling efficiency.

In some embodiments, the end cap 30 further includes a second protruding portion 35. The cap body 31 surrounds the second protruding portion 35. The second protruding portion 35 protrudes from the inner surface 311 of the cap body toward the first tab 12. A second recessed portion 36 is formed on the end cap 30 at a position corresponding to the second protruding portion 35, and the second recessed portion is recessed from an outer surface 312 of the cap body toward the electrode assembly 10.

The second protruding portion 35 and the second recessed portion 36 may be formed by stamping the end cap 30.

The battery cell 7 may emit a small amount of gas during normal cycling. The gas may increase the internal pressure of the battery cell 7, thereby bringing the risk of deformation of the end cap 30. By disposing the second protruding portion 35 and the second recessed portion 36 in the middle of the end cap 30, this embodiment increases the strength of the end cap 30 and reduces deformation of the end cap 30.

In some embodiments, a fragile portion V is disposed in a region opposite to a bottom face of the second recessed portion 36 on the second protruding portion 35. The fragile portion V is configured to rupture when an internal pressure of the battery cell 7 reaches a threshold, so as to release the internal pressure.

By disposing the fragile portion V on the second protruding portion 35, this embodiment releases the internal pressure when the battery cell 7 is thermally runaway, thereby improving the safety performance. The fragile portion V is formed in the region opposite to the bottom face of the second recessed portion 36 on the second protruding portion 35, thereby increasing the distance between the fragile portion V and other external components, and reducing the risk that an external component crushes the fragile portion V.

In some embodiments, a second avoidance clearance G2 is formed between the second protruding portion 35 and the current collecting member 50.

The amount by which the first protruding portion 32 protrudes from the inner surface 311 of the cap body is greater than the amount by which the second protruding portion 35 protrudes from the inner surface 311 of the cap body. In this way, the first protruding portion 32 can support the current collecting member 50, so as to form a second avoidance clearance G2 between the second protruding portion 35 and the current collecting member 50.

In this embodiment, the second avoidance clearance G2 is formed between the second protruding portion 35 and the current collecting member 50 to reduce the risk that the current collecting member 50 blocks a degassing channel when the fragile portion V is ruptured, ensure smooth degassing, and reduce safety hazards.

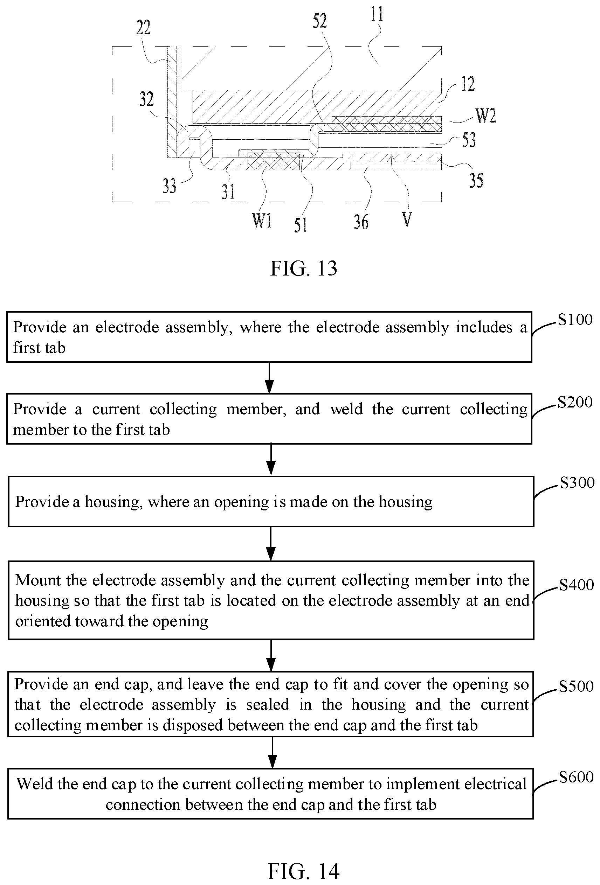

FIG. 12 is a schematic sectional view of a battery cell according to still other embodiments of this application; and FIG. 13 is schematic close-up view of a boxed position C of the battery cell shown in FIG. 12.

As shown in FIG. 12 and FIG. 13, in some embodiments, the current collecting member 50 includes: a first current collecting portion 51, configured to abut on and be welded to the end cap 30 to form the first weld portion W1; a second current collecting portion 52, configured to abut on and be welded to the first tab 12 to form the second weld portion W2. The second current collecting portion 52 is disposed protrusively on a surface that is of the first current collecting portion 51 and that is oriented toward the electrode assembly 10. An avoidance recess 53 is disposed on the second current collecting portion 52 on a side oriented away from the electrode assembly 10. The avoidance recess 53 is configured to avoid the second weld portion W2.

The end cap 30 may be flat plate-shaped or in other shapes.

In this embodiment, the avoidance recess 53 configured to avoid the second weld portion W2 is disposed to prevent the second weld portion W2 from interfering with the abutment between the first current collecting portion 51 and the end cap 30, ensure sufficient connection strength between the first current collecting portion 51 and the end cap 30, and reduce the risk that the second weld portion W2 crushes the end cap 30. The avoidance recess 53 reduces the thickness of the second current collecting portion 52, thereby reducing the welding power required for welding the second current collecting portion 52 to the first tab 12, reducing heat emission, and reducing the risk of burning other members (such as a separator).

In some embodiments, the first current collecting portion 51 is a flat plate structure around the second current collecting portion 52.

In some embodiments, the end cap 30 includes: a cap body 31, configured to be welded to the first current collecting portion 51 to form the first weld portion W1; and a first protruding portion 32, disposed around the cap body 31, and protruding from an inner surface of the cap body toward the first tab 12. The first protruding portion 32 is configured to abut on the first tab 12 to support the first tab 12.

In this embodiment, the second current collecting portion 52 supports a middle region of the first tab 12, and the first protruding portion 32 supports an edge region of the first tab 12, thereby improving uniformity of the force on the first tab 12 and reducing the risk of offset and misalignment of the electrode plate of the electrode assembly 10 in the thickness direction Z.

In some embodiments, a first recessed portion 33 is formed on the end cap 30 at a position corresponding to the first protruding portion 32. The first recessed portion is recessed from an outer surface of the cap body toward the electrode assembly 10. A bottom face of the first recessed portion 33 is closer to the first tab 12 than the inner surface of the cap body.

The first recessed portion 33 and the first protruding portion 32 may be formed by stamping the end cap 30. The greater the depth of the first recessed portion 33 along the thickness direction Z, the larger the amount by which the first protruding portion 32 protrudes from the inner surface of the cap body.

This embodiment of this application ensures an appropriate amount by which the first protruding portion 32 protrudes from the inner surface of the cap body, so as to support the first tab 12. At the same time, on the premise of ensuring an appropriate protrusion amount of the first protruding portion 32, this embodiment of this application further ensures an appropriate recessing amount of the first recessed portion 33, thereby increasing the elasticity of the first protruding portion 32, reducing the impact force generated when the first protruding portion 32 approaches and presses the first tab 12, and reducing the risk of crushing the first tab 12.

In some embodiments, an outer side face of the first protruding portion abuts on an inner surface of the housing 20 and is configured to be welded to the housing 20 to close the opening 21.

The outer side face of the first protruding portion is a surface of the first protruding portion 32, where the surface is oriented toward the sidewall 22 of the housing 20. The outer side face of the first protruding portion is a column face. Optionally, the outer side face of the first protruding portion is a cylindrical face.

The part of the first protruding portion 32, which protrudes into the housing 20, may be in interference fit, transition fit, or clearance fit with the housing 20. Optionally, the part of the first protruding portion 32, which protrudes into the housing 20, may be in interference fit with the housing 20. The interference fit increases connection strength between the housing 20 and the end cap 30, and improves the sealing performance.

Optionally, the first protruding portion 32 and the sidewall 22 of the housing 20 are connected by laser welding. During the welding, a laser beam is radiated on a junction between the first protruding portion 32 and the sidewall 22. The laser beam melts and connects together at least a part of the outer side face 321 of the first protruding portion and a part of the inner surface of the housing 20. The outer side face of the first protruding portion abuts on the inner surface of the housing 20, thereby reducing the risk of burning the electrode assembly 10 by the laser beam radiated into the housing 20.

Alternatively, the laser beam may be radiated on an outer surface of the sidewall 22, where the outer surface is oriented away from the first protruding portion 32.

In this embodiment, the sealing is implemented by welding, so as to reduce the risk of leaking an electrolytic solution, and increase the connection strength and flow capacity between the first protruding portion 32 and the housing 20.

In some embodiments, the end cap 30 further includes a second protruding portion 35. The cap body 31 surrounds the second protruding portion 35. The second protruding portion 35 protrudes from the inner surface 311 of the cap body toward the first tab 12 and extends into the avoidance recess 53. A second recessed portion 36 is formed on the end cap 30 at a position corresponding to the second protruding portion 35, and the second recessed portion is recessed from an outer surface of the cap body toward the electrode assembly 10.

The second protruding portion 35 and the second recessed portion 36 may be formed by stamping the end cap 30.

The battery cell 7 may emit a small amount of gas during normal cycling. The gas may increase the internal pressure of the battery cell 7, thereby bringing the risk of deformation of the end cap 30. By disposing the second protruding portion 35 and the second recessed portion 36 in the middle of the end cap 30, this embodiment increases the strength of the end cap 30 and reduces deformation of the end cap 30.

In some embodiments, a fragile portion V is disposed in a region opposite to a bottom face of the second recessed portion 36 on the second protruding portion 35. The fragile portion V is configured to rupture when an internal pressure of the battery cell 7 reaches a threshold, so as to release the internal pressure. The avoidance recess 53 is further configured to separate the second current collecting portion 52 from the fragile portion V.

By disposing the fragile portion V on the second protruding portion 35, this embodiment releases the internal pressure when the battery cell 7 is thermally runaway, thereby improving the safety performance. The fragile portion V is formed in the region opposite to the bottom face of the second recessed portion 36 on the second protruding portion 35, thereby increasing the distance between the fragile portion V and other external components, and reducing the risk that an external component crushes the fragile portion V.

The avoidance recess 53 according to this embodiment can reduce the risk that the current collecting member 50 blocks a degassing channel when the fragile portion V is ruptured, ensure smooth degassing, and reduce safety hazards.

In some embodiments, the end cap 30 further includes an extension portion (not shown) around the first protruding portion. A surface that is of the extension portion and that is oriented toward the first tab abuts on and is welded to an end face of the housing around the opening to close the opening.

FIG. 14 is a schematic flowchart of a method for manufacturing a battery cell according to some embodiments of this application.

As shown in FIG. 14, the method for manufacturing a battery cell according to an embodiment of this application includes the following steps:
S 100: Providing an electrode assembly, where the electrode assembly includes a first tab;
S200: Providing a current collecting member, and welding the current collecting member to the first tab;
S300: Providing a housing, where an opening is made on the housing;
S400: Mounting the electrode assembly and the current collecting member into the housing so that the first tab is located on the electrode assembly at an end oriented toward the opening;
S500: Providing an end cap, and leaving the end cap to fit and cover the opening so that the electrode assembly is sealed in the housing and the current collecting member is disposed between the end cap and the first tab; and
S600: Welding the end cap to the current collecting member to implement electrical connection between the end cap and the first tab.

It is hereby noted that, for the related structure of the battery cell manufactured by the foregoing method for manufacturing a battery cell, refer to the descriptions of the battery cells provided in the foregoing embodiments.

In assembling a battery cell based on the foregoing method for manufacturing a battery cell, the foregoing steps are not necessarily performed in sequence. That is, the steps may be performed in the order mentioned in the embodiments, or the steps may be performed in order different from what is mentioned in the embodiments, or several steps are performed concurrently. For example, step S100 and step S300 are not necessarily performed sequentially, but may be performed simultaneously.

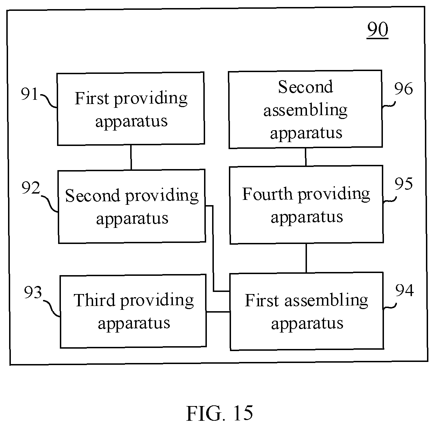

FIG. 15 is a schematic block diagram of a system for manufacturing a battery cell according to some embodiments of this application.

As shown in FIG. 15, the system 90 for manufacturing a battery cell according to an embodiment of this application includes:
a first providing apparatus 91, configured to provide an electrode assembly, where the electrode assembly includes a first tab;
a second providing apparatus 92, configured to provide a current collecting member, and weld the current collecting member to the first tab;
a third providing apparatus 93, configured to provide a housing, where an opening is made on the housing;
a first assembling apparatus 94, configured to mount the electrode assembly and the current collecting member into the housing so that the first tab is located on the electrode assembly at an end oriented toward the opening;
a fourth providing apparatus 95, configured to provide an end cap, and leave the end cap to fit and cover the opening so that the electrode assembly is sealed in the housing and the current collecting member is disposed between the end cap and the first tab; and
a second assembling apparatus 96, configured to weld the end cap to the current collecting member to implement electrical connection between the end cap and the first tab.

For the related structure of the battery cell manufactured by the foregoing manufacturing system, refer to the descriptions of the battery cells provided in the foregoing embodiments.

It is hereby noted that to the extent that no conflict occurs, the embodiments of this application and the features in the embodiments may be combined with each other.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some technical features in the technical solutions. Such modifications and replacements do not make the essence of the corresponding technical solutions depart from the spirit and scope of the technical solutions of the embodiments of this application.

## Claims

1. A battery cell, comprising:
a housing, on which an opening is made;
an electrode assembly, accommodated in the housing, wherein the electrode assembly comprises a first tab at an end oriented toward the opening;
an end cap, configured to fit and cover the opening to seal the electrode assembly in the housing;
a current collecting member, disposed between the end cap and the first tab, wherein the current collecting member is configured to be welded to the end cap and the first tab separately to implement electrical connection between the end cap and the first tab;
wherein the current collecting member comprises:
a first current collecting portion, configured to abut on and be welded to the end cap to form a first weld portion;
a second current collecting portion, configured to abut on and be welded to the first tab to form a second weld portion;
wherein a projection of the first weld portion along a thickness direction of the end cap does not overlap a projection of the second weld portion along the thickness direction of the end cap;
wherein the second current collecting portion is disposed protrusively on a surface that is of the first current collecting portion and that is oriented toward the electrode assembly, an avoidance recess is disposed on the second current collecting portion on a side oriented away from the electrode assembly, and the avoidance recess is configured to avoid the second weld portion.

2. The battery cell according to claim 1, wherein the electrode assembly is wound around a central axis to form the first tab, the first tab comprises N layer structures arranged around the central axis, and an extension direction of the central axis is parallel to the thickness direction of the end cap;
the first tab is formed of a first annular portion and a second annular portion around the first annular portion, a number of the layer structures in the first annular portion is N1, a number of the layer structures in the second annular portion is N2, N = N1 + N2, |N1-N2| is less than or equal to 2, and N1 and N2 are positive integers; and
the first annular portion is welded to the current collecting member to form a first part, the second annular portion is welded to the current collecting member to form a second part connected to the first part, and the second weld portion is formed of the first part and the second part.

3. The battery cell according to claim 2, wherein N3 continuous layer structures disposed near the second annular portion in the first annular portion are welded to the current collecting member to form the first part, N4 continuous layer structures disposed near the first annular portion in the second annular portion are welded to the current collecting member to form the second part, the N3 continuous layer structures and the N4 continuous layer structures are arranged continuously, N4 > N3 ≥ 1, and N3 and N4 are positive integers.

4. The battery cell according to claim 2 or 3, wherein M continuous layer structures in all the layer structures are welded to the current collecting member to form the second weld portion, wherein 1/3 ≤ M/N ≤ 1/2, M ≥ 2, and M is a positive integer.

5. The battery cell according to any one of the preceding claims, wherein the end cap comprises:
a cap body, configured to be welded to the first current collecting portion to form the first weld portion; and
a first protruding portion, disposed around the cap body, and protruding from an inner surface of the cap body toward the first tab, wherein the first protruding portion is configured to abut on the first tab to support the first tab.

6. The battery cell according to claim 5, wherein a first recessed portion is formed on the end cap at a position corresponding to the first protruding portion, the first recessed portion is recessed from an outer surface of the cap body toward the electrode assembly, and a bottom face of the first recessed portion is closer to the first tab than the inner surface of the cap body.

7. The battery cell according to claim 5 or 6, wherein an outer side face of the first protruding portion abuts on an inner surface of the housing and is configured to be welded to the housing to close the opening, and optionally the outer side face is a column face, preferably a cylindrical face.

8. The battery cell according to any one of claims 5 to 7, wherein the end cap further comprises a second protruding portion, the cap body surrounds the second protruding portion, and the second protruding portion protrudes from the inner surface of the cap body toward the first tab and extends into the avoidance recess; and
a second recessed portion is formed on the end cap at a position corresponding to the second protruding portion, and the second recessed portion is recessed from an outer surface of the cap body toward the electrode assembly; and optionally
a fragile portion is disposed in a region opposite to a bottom face of the second recessed portion on the second protruding portion, and the fragile portion is configured to rupture when an internal pressure of the battery cell reaches a threshold, so as to release the internal pressure; and
the avoidance recess is further configured to separate the second current collecting portion from the fragile portion.

9. The battery cell according to any one of claims 1 to 8, wherein the end cap is configured to electrically connect the first tab and the housing.

10. The battery cell according to claim 9, wherein the housing further comprises a sidewall and a bottom wall connected to the sidewall, the sidewall extends along a thickness direction of the end cap and is disposed around the electrode assembly, and an electrode lead-out hole is disposed on the bottom wall;
the electrode assembly further comprises a second tab, and the first tab and the second tab are of opposite polarities and located at two ends of the electrode assembly respectively; and
the battery cell further comprises an electrode terminal mounted in the electrode lead-out hole, and the electrode terminal is electrically connected to the second tab; and preferably
the bottom wall and the sidewall are a one-piece structure.

11. The battery cell according to any one of claims 9 to 10, wherein the first tab is a negative tab, and a substrate material of the housing is steel.

12. The battery cell according to any one of claims 1 to 11, wherein a substrate material of the housing is identical to a substrate material of the end cap; and/or
wherein the battery cell is a cylindrical cell.

13. A battery, comprising a plurality of battery cells according to any one of claims 1 to 12.

14. An electrical device, comprising the battery according to claim 13, wherein the battery is configured to provide electrical energy.

15. A method for manufacturing a battery cell, comprising:
providing an electrode assembly, wherein the electrode assembly comprises a first tab;
providing a current collecting member, and welding the current collecting member to the first tab;
providing a housing, wherein an opening is made on the housing;
mounting the electrode assembly and the current collecting member into the housing so that the first tab is located on the electrode assembly at an end oriented toward the opening;
providing an end cap, and leaving the end cap to fit and cover the opening so that the electrode assembly is sealed in the housing and the current collecting member is disposed between the end cap and the first tab; and
welding the end cap to the current collecting member to implement electrical connection between the end cap and the first tab,
wherein the current collecting member comprises:
a first current collecting portion, configured to abut on and be welded to the end cap to form a first weld portion;
a second current collecting portion, configured to abut on and be welded to the first tab to form a second weld portion;
wherein a projection of the first weld portion along a thickness direction of the end cap does not overlap a projection of the second weld portion along the thickness direction of the end cap;
wherein the second current collecting portion is disposed protrusively on a surface that is of the first current collecting portion and that is oriented toward the electrode assembly, an avoidance recess is disposed on the second current collecting portion on a side oriented away from the electrode assembly, and the avoidance recess is configured to avoid the second weld portion.
